# EUROPÄISCHE PATENTANMELDUNG

(11) **EP 4 821 410 A2**
(43) Veröffentlichungstag der Anmeldung: **14.10.2026**
(21) Anmeldenummer: 26170335.9
(22) Anmeldetag: 01.04.2026
(51) Int. Cl.: A47J 31/36, A47J 31/46

(54) **BRÜHEINHEIT FÜR EINEN KAFFEEVOLLAUTOMATEN**

(30) Priorität: 08.04.2025 DE 102025113869
(71) Anmelder: BSH Hausgeräte GmbH, 81739 München (DE)
(72) Erfinder: Kocher, Jan, 83278 Traunstein (DE); Haslacher, Christian, 5303 Thalgau (AT); Breucker, Manfred, 83417 Kirchanschöring (DE)

(57) **Zusammenfassung**

Die vorliegende Erfindung betrifft eine Brüheinheit (1) für einen Kaffeevollautomaten,
- mit einem Gehäuse (2), welches einen als Brühkammer (5) fungierenden Gehäuseinnenraum (4) teilweise begrenzt,
- mit einem den Gehäuseinnenraum (4) teilweise begrenzenden Kolben (6), in oder an welchem eine Auslassleitung (11) zum Ausleiten des in der Brüheinheit (5) zubereiteten Kaffeeheißgetränks (KHG) angeordnet ist,
- mit einem den Gehäuseinnenraum (4) teilweise begrenzenden und dem Kolben (6) gegenüberliegenden Stempel (8), der zum Verpressen von im Gehäuseinnenraum (4) vorhandenem Kaffeepulver (KP) gegenüber dem Gehäuse (2) verstellbar ausgebildet ist,
- mit einem im Kolben (6) angeordneten und fluidisch mit der Brühkammer (5) kommunizierenden ersten Fluidpfad (7a) zum Durchströmen mit dem in der Brühkammer (5) gebrühten Kaffeeheißgetränk (KHG) und mit einer im ersten Fluidpfad (7a) angeordneten und mittels des Stempels (8) verstellbare ersten Ventileinrichtung (9a) zum Freigeben des ersten Fluidpfads (7a),
- mit einer im Kolben (6) angeordneten und fluidisch mit der Brühkammer (5) kommunizierenden zweiten Fluidpfad (7b) zum Durchströmen mit dem in der Brühkammer (5) gebrühten Kaffeeheißgetränk (KHG) und mit einer im zweiten Fluidpfad (7b) angeordneten zweiten Ventileinrichtung (9b), zum Verschließen des zweiten Fluidpfads (7b),
- wobei die erste Ventileinrichtung (9a) mittels einer ersten Vorspanneinrichtung (10a) zu einer den ersten Fluidpfad (7a) freigebenden Offenstellung hin und die zweite Ventileinrichtung (9b) mittels einer zweiten Vorspanneinrichtung (10b) zu einer den zweiten Fluidpfad (7b) verschließenden Schließstellung hin vorgespannt sind.

## Beschreibung

Die vorliegende Erfindung betrifft eine Brüheinheit für einen Kaffeevollautomaten sowie einen Kaffeevollautomaten mit einer solchen Brüheinheit.

Brüheinheiten für moderne Kaffeevollautomaten sollen die Zubereitung einer möglichst großen Bandbreite an unterschiedlichen Kaffeeheißgetränken ermöglichen. Diese Heißgetränke können in ihrer Grundform auf druckgebrühte und drucklos gebrühte Kaffeeheißgetränke reduziert werden. So erfordert beispielsweise die Zubereitung eines Espresso im Gegensatz zur Zubereitung eines Filterkaffees ein Aufbrühen des Kaffeepulvers unter vergleichsweise hohem Druck.

Herkömmliche Brüheinheiten sind in Kaffeemaschinen daher entweder zur Zubereitung von druckgebrühten Kaffeeheißgetränken oder aber zur Zubereitung von drucklos gebrühten Kaffeeheißgetränken ausgebildet.

Es ist daher eine Aufgabe der vorliegenden Erfindung, bei der Entwicklung einer eingangs beschriebenen Brüheinheit neue Wege aufzuzeigen.

Diese Aufgabe wird erfindungsgemäß durch den Gegenstand der unabhängigen Patentansprüche gelöst. Vorteilhafte Ausführungsformen sind Gegenstand der abhängigen Patentansprüche.

Grundidee der Erfindung ist demnach, eine Brüheinheit mit einer verstellbaren Ventileinrichtung auszustatten, so dass bei Verwendung der Brüheinheit in einer Kaffeemaschine in Abhängigkeit vom Verstell-Zustand der Ventileinrichtung wahlweise ein drucklos gebrühtes Kaffeeheißgetränk wie etwa ein Filterkaffee oder ein druckgebrühtes Kaffeeheißgetränk wie beispielsweise ein Espresso zubereitet werden können. Die hier vorgestellte, erfindungsgemäße Brüheinheit ist also sowohl zur Zubereitung eines druckgebrühten als auch eines drucklosgebrühten Kaffeeheißgetränks geeignet. Die Bereitstellung von separaten Brüheinheiten bzw. Kaffeemaschine, jeweils zur Zubereitung von entweder druckgebrühten oder drucklos gebrühten Kaffeeheißgetränken, kann somit entfallen. Damit einher gehen erhebliche Kostenvorteile.

Obigem Erfindungsgedanken folgend umfasst eine erfindungsgemäße Brüheinheit für einen Kaffeevollautomaten gemäß einem ersten Aspekt der Erfindung ein Gehäuse, welches einen als Brühkammer fungierenden Gehäuseinnenraum teilweise begrenzt. Ferner umfasst die Brüheinheit einen den Gehäuseinnenraum teilweise begrenzenden Kolben, in welchem eine Auslassleitung zum Ausleiten des in der Brüheinheit zubereiteten Kaffeeheißgetränks angeordnet ist. Weiterhin umfasst die Brüheinheit einen den Gehäuseinnenraum teilweise begrenzenden und dem Kolben, vorzugsweise axial, gegenüberliegenden Stempel, der zum Verpressen von im Gehäuseinnenraum vorhandenem Kaffeepulver gegenüber dem Gehäuse verstellbar ausgebildet ist. Besagter Stempel ist dem Fachmann auch unter der Bezeichnung "Lifter" bekannt. Zwischen dem Kolben und dem Stempel kann ein gegenüber dem Gehäuse verstellbar ausgebildeter Siebträger mit einem für das aufgebrühte Kaffeepulver undurchlässigen Sieb angeordnet sein. Die Brüheinheit umfasst außerdem einen im Kolben angeordneten und fluidisch mit der Brühkammer kommunizierenden ersten Fluidpfad zum Durchströmen mit dem in der Brühkammer gebrühten Kaffeeheißgetränk. Weiterhin umfasst die Brüheinheit eine im ersten Fluidpfad angeordneten und mittels des Stempels verstellbare ersten Ventileinrichtung zum wahlweisen fluidischen Verschließen oder Freigeben des ersten Fluidpfads. Auch umfasst die Brüheinheit einen im Kolben angeordneten und fluidisch mit der Brühkammer kommunizierenden zweiten Fluidpfad zum Durchströmen mit dem in der Brühkammer aufgebrühten Kaffeeheißgetränk und mit einer im zweiten Fluidpfad angeordneten zweiten Ventileinrichtung zum wahlweisen fluidischen Verschließen oder Freigeben des zweiten Fluidpfads. Erfindungsgemäß ist die erste Ventileinrichtung mittels einer ersten Vorspanneinrichtung zu einer den ersten Fluidpfad freigebenden Offenstellung hin und die zweite Ventileinrichtung mittels einer zweiten Vorspanneinrichtung zu einer den zweiten Fluidpfad verschließenden Schließstellung hin vorgespannt.

Soll ein druckbehaftetes Kaffeeheißgetränk zubereitet werden, so kann die erste Ventileinrichtung mithilfe des Stempels und folglich unter Verpressung des in der Brühkammer vorhandenen Kaffeepulvers und unter Überwindung der auf den Stempel wirkenden Vorspannung von der Offenstellung in die Schließstellung bewegt bzw. gedrückt werden, in welcher die erste Ventileinrichtung den ersten Fluidpfad verschließt. Dann kann das in der Brühkammer zubereitete Kaffeeheißgetränk ausschließlich über den zweiten Fluidpfad aus der Brühkammer gelangen. Dazu muss aber der mittels einer Pumpe erzeugte und vom Kaffeeheißgetränk ausgeübte Druck so groß sein, dass er die vom zweiten Vorspannelement auf die zweite Ventileinrichtung ausgeübte Vorspannkraft überwindet, so dass die zweite Ventileinrichtung öffnet, also aus der Schließstellung in die Offenstellung bewegt wird. Dann kann das in der Brühkammer aufgebrühte Kaffeeheißgetränk über den zweiten Fluidpfad aus der Brühkammer austreten und über eine Auslassleitung als druckbehaftet zubereitetes Kaffeeheißgetränk bereitgestellt werden.

Soll hingegen ein Kaffeeheißgetränk drucklos zubereitet werden, so wird die Bewegung des Stempels ohne Verpressung des Kaffeepulvers gestoppt, bevor der Stempel die erste Ventileinrichtung betätigen kann. Folglich verbleibt die erste Ventileinrichtung in der Offenstellung. Somit kann das in der Brühkammer zubereitete Kaffeeheißgetränk aus der Brühkammer in den ersten Fluidpfad austreten. Da also eine Fluidverbindung der Brühkammer mit dem ersten Fluidpfad besteht, kann in der Brühkammer mittels einer Pumpe der Kaffeemaschine nicht genügend Druck aufgebaut werden, um die zweite Ventileinrichtung aus ihrer Schließstellung weg in die Offenstellung zu bewegen. Folglich kann in der Brühkammer erzeugtes Kaffeeheißgetränk auch nicht in den zweiten Fluidpfad eintreten, sondern verlässt die Brühkammer ausschließlich als drucklos zubereitetes Kaffeeheißgetränk über den ersten Fluidpfad.

Bei einer bevorzugten Ausführungsform ist die erste Ventileinrichtung mittels des Stempels in eine Schließstellung verstellbar, in welcher der erste Fluidpfad fluiddicht verschlossen ist. Der Stempel fungiert also bei dieser Ausführungsform als Betätigungselement für die erste Ventileinrichtung.

Besonders bevorzugt können die beiden Vorspanneinrichtungen so aufeinander abgestimmt sein, dass die zweite Ventileinrichtung zumindest solange in der Schließstellung verbleibt, bis die erste Ventileinrichtung mittels des Stempels in die Schließstellung ist. Dies bedeutet, dass zum Öffnen der zweiten Ventileinrichtung die erste Ventileinrichtung zunächst vollständig geschlossen sein muss. Auf diese Weise wird sichergestellt, dass erst dann druckbehaftet zubereitetes Kaffeeheißgetränk durch den zweiten Fluidpfad strömen kann, wenn der erste Fluidpfad vollständig geschlossen ist.

Bei einer bevorzugten Ausführungsform ist der zweite Fluidpfad mit der zweiten Ventileinrichtung innerhalb der ersten Ventileinrichtung angeordnet. Diese Variante baut besonders kompakt.

Besonders bevorzugt kann der erste Fluidpfad den zweiten Fluidpfad außen umhüllen und außerdem mittels des Materials des Kolbens fluidisch vom zweiten Fluidpfad getrennt sein. Auch diese Variante benötigt besonders wenig Bauraum.

**In** einer zu den beiden voranstehend erläuterten Ausführungsformen alternativen Ausführungsvariante kann der zweite Fluidpfad mit der zweiten Ventileinrichtung im Abstand zum ersten Fluidpfad mit der ersten Ventileinrichtung im Kolben angeordnet sein. Dieser Aufbau ist technisch besonders einfach realisierbar und somit besonders wenig störanfällig.

Zweckmäßig können die beiden Fluidkanäle im Abstand zueinander fluidisch mit der Brühkammer kommunizieren. Diese Ausführungsform kann mit beiden voranstehend erläuterten Alternativvarianten kombiniert werden.

Gemäß einer weiteren vorteilhaften Weiterbildung kommunizieren die beiden Fluidkanäle fluidisch mit einer gemeinsamen Auslassleitung. Somit kann die gemeinsame Auslassleitung sowohl zur Ausgabe bzw. Bereitstellung des in der Brühkammer druckbehaftet zubereiteten Kaffeeheißgetränks, etwa in Form eines Espressos, als auch zum Ausgeben des in der Brühkammer drucklos zubereiteten Kaffeeheißgetränks, etwa in Form eines Filterkaffees, herangezogen werden. Da nur eine einzige Auslassleitung erforderlich ist, gehen auch mit dieser vorteilhaften Ausführungsform nicht unerhebliche Kostenvorteile einher. Außerdem erhöht sich der Benutzerkomfort, da der Benutzer der Kaffeemaschine mit einer derart ausgestalteten Brüheinheit nicht darauf achten muss, dass er das Gefäß zur Aufnahme des von der Kaffeemaschine zubereiteten Kaffeeheißgetränks in Abhängigkeit von der gewählten Heißgetränkeart an unterschiedlichen Kaffeeauslässen platzieren muss.

Eine erfindungsgemäße Brüheinheit für einen Kaffeevollautomaten gemäß einem zweiten Aspekt der Erfindung umfasst ein Gehäuse, welches einen als Brühkammer fungierenden Gehäuseinnenraum umgibt, und einen den Gehäuseinnenraum teilweise begrenzenden und dem Kolben gegenüberliegenden Stempel, der zum Verpressen von im Gehäuseinnenraum vorhandenem Kaffeepulver gegenüber dem Gehäuse verstellbar ausgebildet ist. Dabei umfasst der Kolben ein Kolbenoberteil und ein separat zum Kolbenoberteil und gegenüber diesem und dem Gehäuse verstellbar ausgebildetes Kolbenunterteil.

Im Kolbenoberteil ist fluidisch mit der Brühkammer kommunizierender Fluidpfad vorgesehen, in welchem eine verstellbare Ventileinrichtung angeordnet ist, deren Ventilkörper zwischen wenigstens einer ersten und einer zweiten Offenstellungen und einer Schließstellung verstellbar ist. Im Kolbenunterteil ist eine Ventilöffnung vorgesehen, welche in der Schließstellung des Ventilkörpers fluiddicht verschlossen ist und in der Offenstellung zum Durchströmen mit Kaffeeheißgetränk freigegeben ist. Ferner ist das Kolbenunterteil mittels einer ersten Vorspanneinrichtung vom Kolbenoberteil weg vorgespannt und der Ventilkörper mittels einer zweiten Vorspanneinrichtung zum Kolbenunterteil hin vorgespannt.

Bei einer bevorzugten Ausführungsform ist in der ersten Offenstellung der Ventilkörper im Abstand zur Ventilöffnung angeordnet und stützt sich an einem im Fluidpfad ausgebildeten Anschlag ab.

Gemäß einer vorteilhaften Weiterbildung kann in der zweiten Offenstellung der Ventilkörper im Abstand zur Ventilöffnung angeordnet und außerdem - gegensätzlich zur ersten Offenstellung - auch im Abstand zum Anschlag angeordnet sein.

Bei einer bevorzugten Ausführungsform ist am Kolbenoberteil ein Ventilsitz ausgebildet, an welchem der Ventilkörper in der Schließstellung anliegt und zu welcher der Ventilkörper in der Offenstellung im Abstand angeordnet ist.

Gemäß einer vorteilhaften Weiterbildung kann das Kolbenunterteil einen Siebträger zum Separieren von aufgebrühtem Kaffeepulver umfassen.

Die Erfindung betrifft schließlich einen Kaffeevollautomaten, insbesondere zum wahlweisen Bereitstellen eines druckbehaftet oder drucklos zubereiteten Kaffeeheißgetränks. Der erfindungsgemäße Kaffeevollautomat umfasst ein Mahlwerk zum Mahlen von Kaffeebohnen zu Kaffeepulver und eine voranstehend vorgestellte, erfindungsgemäße Brüheinheit zum Erzeugen eines Kaffeeheißgetränks aus Brühwasser und aus dem Kaffeepulver. Die voranstehend erläuterten Vorteile der erfindungsgemäßen Brüheinheit übertragen sich daher auf die erfindungsgemäßen Kaffeevollautomaten. Bevorzugt umfasst der erfindungsgemäße Kaffeevollautomat eine fluidisch mit dem ersten und mit dem zweiten Fluidpfad kommunizierende Auslassleitung zum Ausgeben des in der Brühkammer zubereiteten Kaffeeheißgetränks.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Vorstehend genannte und nachfolgend noch zu nennende Bestandteile einer übergeordneten Einheit, wie z.B. einer Einrichtung, einer Vorrichtung oder einer Anordnung, die separat bezeichnet sind, können separate Bauteile bzw. Komponenten dieser Einheit bilden oder integrale Bereiche bzw. Abschnitte dieser Einheit sein, auch wenn dies in den Zeichnungen anders dargestellt ist.

Bevorzugte Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1,2: ein Beispiel einer erfindungsgemäßen Brüheinheit gemäß dem ersten Aspekt der Erfindung in unterschiedlichen Betriebszuständen,
- Fig. 3, 4: eine Variante des Beispiels der Figuren 1 und 2, bei welcher die beiden Ventileinrichtungen in Abstand zueinander im Kolben angeordnet sind,
- Fig. 5, 6: ein Beispiel einer erfindungsgemäßen Brüheinheit gemäß dem zweiten Aspekt der Erfindung.

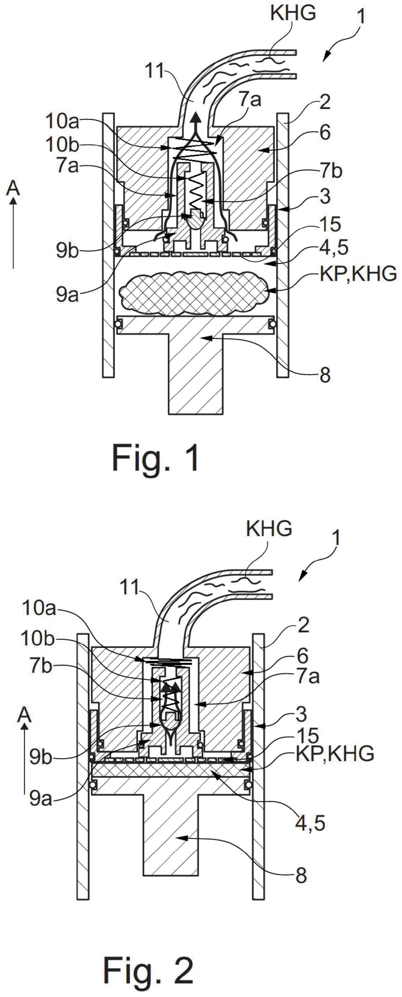

Die Figuren 1 und 2 zeigen jeweils in einer Schnittdarstellung ein Beispiel einer erfindungsgemäßen Brüheinheit 1 gemäß einem ersten Aspekt der Erfindung. Die Figuren 1 und 2 zeigen dabei die Brüheinheit 1 in zwei verschiedenen Funktions- bzw. Betriebszuständen.

Gemäß den Figuren 1 und 2 umfasst die Brüheinheit 1 in Gehäuse 2, welches einen als Brühkammer 5 fungierenden Gehäuseinnenraum 4 teilweise begrenzt. Ferner umfasst die Brüheinheit 1 einen den Gehäuseinnenraum 4 teilweise begrenzenden Kolben 6, in welchem eine Auslassleitung 11 zum Ausleiten von in der Brüheinheit 1 zubereitetem Kaffeeheißgetränks KHG angeordnet ist. Optional kann der Kolben 6 gegenüber dem Gehäuse 2 verstellbar ausgebildet sein. Weiterhin umfasst die Brüheinheit 1 einen den Gehäuseinnenraum 4 teilweise begrenzenden und dem Kolben 6 entlang einer axialen Richtung A gegenüberliegenden Stempel 8, der zum Verpressen von im Gehäuseinnenraum 4 vorhandenem Kaffeepulver KP gegenüber dem Gehäuse 2 und auch gegenüber dem Kolben 6 verstellbar ausgebildet ist. Zwischen dem Kolben 6 und dem Stempel 8 kann ein gegenüber dem Gehäuse 2 verstellbar ausgebildeten Siebträger 3 mit einem für das Kaffeepulver KP undurchlässigen Sieb 15 angeordnet sein.

Die Brüheinheit 1 umfasst außerdem einen im Kolben 6 angeordneten und fluidisch mit der Brühkammer 5 kommunizierenden ersten Fluidpfad 7a zum Durchströmen mit dem in der Brühkammer 5 gebrühten Kaffeeheißgetränk KHG. Weiterhin umfasst die Brüheinheit 1 eine im ersten Fluidpfad 7a angeordnete und mittels des Stempels 8 verstellbare erste Ventileinrichtung 9a zum wahlweisen Verschließen oder Freigeben des ersten Fluidpfads 7a. Auch umfasst die Brüheinheit 1 einen im Kolben 6 angeordneten und fluidisch mit der Brühkammer 5 kommunizierenden zweiten Fluidpfad 7b zum Durchströmen mit dem in der Brühkammer 5 gebrühten Kaffeeheißgetränk und eine im zweiten Fluidpfad 7b angeordnete zweiten Ventileinrichtung 9b zum fluidischen Verschließen des zweiten Fluidpfads 7b. Im Beispiel der Figuren 1 und 2 ist die zweite Fluidpfad 7b mit der zweiten Ventileinrichtung 9b innerhalb der ersten Ventileinrichtung 9a angeordnet. Dabei umgibt der erste Fluidpfad 7a den zweiten Fluidpfad 7b außen und ist mittels des Materials der ersten Ventileinrichtung 9a fluidisch vom zweiten Fluidpfad 7b getrennt.

Die erste Ventileinrichtung 9a ist mittels einer ersten Vorspanneinrichtung 10a zu einer den ersten Fluidpfad 7a freigebenden Offenstellung hin vorgespannt. Die zweite Ventileinrichtung 9b ist mittels einer zweiten Vorspanneinrichtung 10b zu einer den zweiten Fluidpfad 7b verschließenden Schließstellung hin vorgespannt.

Außerdem ist die erste Ventileinrichtung 9a mittels des Stempels 8 in die Schließstellung verstellbar. Die beiden Vorspanneinrichtungen 10a, 10b sind so ausgebildet und aufeinander abgestimmt, dass die zweite Ventileinrichtung 9b zumindest solange in der Schließstellung verbleibt, bis die erste Ventileinrichtung 9a mittels des Stempels 8 in die Schließstellung verstellt ist.

Soll ein Kaffeeheißgetränk drucklos zubereitet werden, so wird die Bewegung des Stempels 8 ohne Verpressung des Kaffeepulvers KP wie in Figur 1 gezeigt gestoppt, bevor dieser die erste Ventileinrichtung 9a betätigen kann. Dadurch verbleibt die erste Ventileinrichtung 9a in der Offenstellung. Folglich kann das in der Brühkammer 5 zubereitete Kaffeeheißgetränk KHG aus der Brühkammer 5 in den ersten Fluidpfad 7a austreten.

Da der Stempel 8 im Abstand zur Schließstellung angeordnet ist und folglich eine Fluidverbindung der Brühkammer 5 mit dem ersten Fluidpfad 7a besteht, kann in der Brühkammer 5 nicht genügend Druck aufgebaut werden, um die zweite Ventileinrichtung 9b aus der Schließstellung weg zu bewegen. Folglich verharrt die zweite Ventileinrichtung 9b aufgrund der wirkenden Vorspannung durch die zweite Vorspanneinrichtung 10b in der Schließstellung, und das in der Brühkammer 5 erzeugte Kaffeeheißgetränk KHG kann nicht in den zweiten Fluidpfad 7b eintreten, sondern verlässt die Brühkammer 5 ausschließlich über den ersten Fluidpfad 7a und kann über die Auslassleitung 11 als drucklos zubereitetes Kaffeeheißgetränk KHG bereitgestellt werden.

Soll hingegen ein druckbehaftetes Kaffeeheißgetränk zubereitet werden, so betätigt der Stempel 8 wie in Figur 2 gezeigt unter Verpressung des in der Brühkammer 5 vorhandenen Kaffeepulvers KP und unter Überwindung der auf die erste Ventileinrichtung 9a wirkenden Vorspannung über den Siebträger 3 die erste Ventileinrichtung 9a, so dass diese von der Offenstellung in die Schließstellung verstellt wird, in welcher sie den ersten Fluidpfad 7a verschließt. Nun kann das in der Brühkammer 5 zubereitete Kaffeeheißgetränk KHG ausschließlich über den zweiten Fluidpfad 7b aus der Brühkammer 5 gelangen. Dazu muss aber der vom Kaffeeheißgetränk auf die zweite Ventileinrichtung 9b ausgeübte Druck so groß sein, dass er die vom zweiten Vorspannelement 10b auf die zweite Ventileinrichtung 9b ausgeübte Vorspannkraft überwindet und in der Folge die zweite Ventileinrichtung 9b öffnet. Dann kann das in der Brühkammer 5 aufgebrühte Kaffeeheißgetränk KHG über den zweiten Fluidpfad aus der Brühkammer 5 austreten und über die Auslassleitung 11 als druckbehaftet zubereitetes Kaffeeheißgetränk KHG bereitgestellt werden.

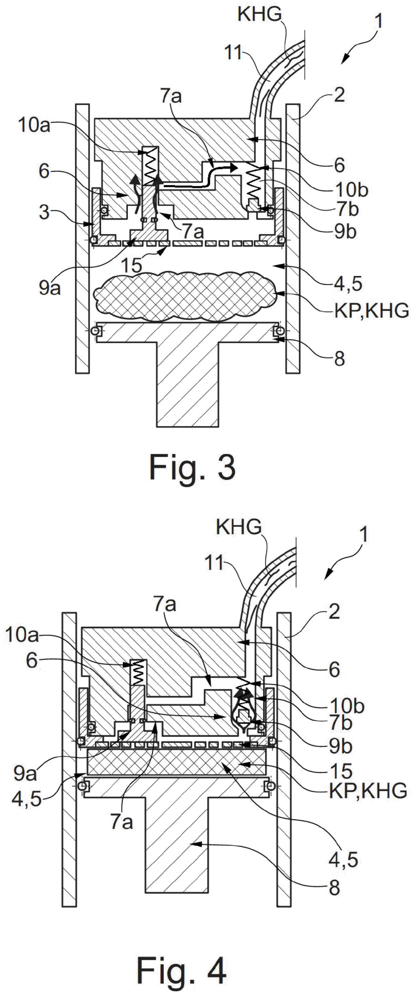

Die Figuren 3 und 4 zeigen eine Variante des Beispiels der Figuren 1 und 2. Die Figuren 3 und 4 zeigen dabei die Brüheinheit 1 in analoger Weise zu den Figuren 1 und 2 in unterschiedlichen Funktions- bzw. Betriebszuständen. Die Darstellung der Figur 3 korrespondiert dabei mit jener der Figur 1, die Darstellung der Figur 4 mit jener der Figur 2. Hier ist der zweite Fluidpfad 7b mit der zweiten Ventileinrichtung 9b im Abstand zum ersten Fluidpfad 7a im Kolben 6 angeordnet. Zweckmäßig können die beiden Fluidkanäle 7a, 7b wie gezeigt im Abstand zueinander von der Brühkammer 5 ausgehen. Die beiden Fluidpfade 7a, 7b kommunizieren außerdem fluidisch mit einer gemeinsamen Auslassleitung 11. Somit kann die gemeinsame Auslassleitung 11 sowohl zum Ausgeben eines in der Brühkammer 5 sowohl drucklos als auch druckbehaftet zubereiteten Kaffeeheißgetränks KHG herangezogen werden.

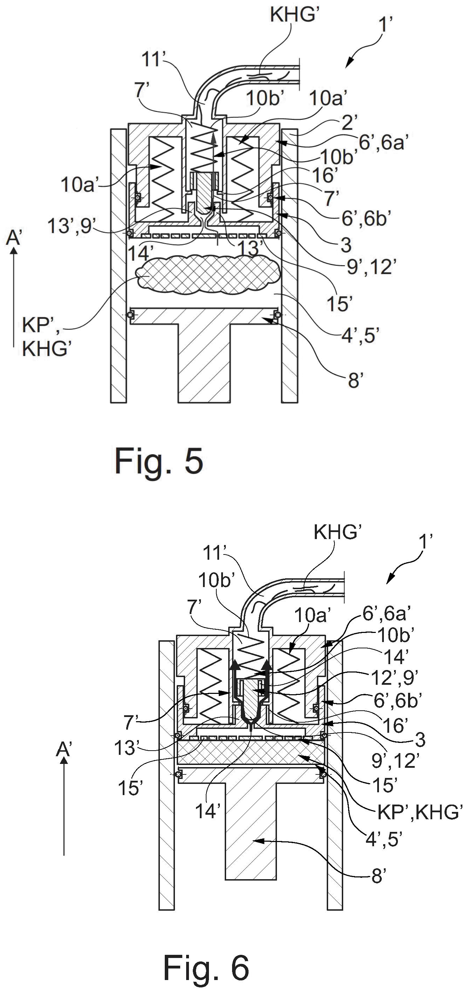

Die Figuren 5 und 6 zeigt ein Beispiel einer erfindungsgemäßen Brüheinheit 1' gemäß dem zweiten Aspekt der Erfindung. Beim Beispiel der Figuren 5 und 6 ist gegensätzlich zum Beispiel der Figuren 1 bis 4 anstelle eines ersten und zweiten Fluidpfads 7a, 7b nur ein einziger Fluidpfad 7' vorgesehen. Die Figuren 5 und 6 zeigen dabei die Brüheinheit 1 in analoger Weise zu den Figuren 1 und 2 bzw. zu den Figuren 3 und 4 in unterschiedlichen Funktions- bzw. Betriebszuständen. Die Darstellung der Figur 5 korrespondiert dabei mit jener der Figur 1, die Darstellung der Figur 6 mit jener der Figur 2.

Auch die Brüheinheit 1' umfasst ein Gehäuse 2', welches einen als Brühkammer 5' fungierenden Gehäuseinnenraum 4' umgibt. Ferner umfasst die Brüheinheit 1' einen den Gehäuseinnenraum (4') teilweise begrenzenden und dem Kolben 6' gegenüberliegenden Stempel 8', der zum Verpressen von im Gehäuseinnenraum 4' vorhandenem Kaffeepulver KP' gegenüber dem Gehäuse 2' verstellbar ausgebildet ist.

Der Kolben 6' umfasst gemäß den Figuren 5 und 6 ein Kolbenoberteil 6a' und ein separat zum Kolbenoberteil 6a' und gegenüber diesem und dem Gehäuse 2' verstellbar ausgebildetes Kolbenunterteil 6b'. Im Kolbenoberteil 6a' ist ein fluidisch mit der Brühkammer 5' kommunizierender Fluidpfad 7 angeordnet, in welchem eine verstellbare Ventileinrichtung 9' angeordnet ist, deren Ventilkörper 12' zwischen wenigstens einer ersten und einer zweiten Offenstellung und einer Schließstellung verstellbar ist.

Im Kolbenunterteil 6b' ist eine Ventilöffnung 14' vorgesehen, welche in der Schließstellung des Ventilkörpers 12' von diesem fluiddicht verschlossen ist und in den beiden Offenstellungen zum Durchströmen mit Kaffeeheißgetränk KHG' freigegeben ist. Das Kolbenunterteil 6b' ist mittels einer ersten Vorspanneinrichtung 10a' vom Kolbenoberteil 6a' weg vorgespannt. Der Ventilkörper 12' ist mittels einer zweiten Vorspanneinrichtung 10b' zum Kolbenunterteil 6b' hin vorgespannt. Am Kolbenunterteil 6b' kann ein Ventilsitz 13' ausgebildet sein, an welchem der Ventilkörper 12' in der (nicht gezeigten) Schließstellung anliegt und zu welchem der Ventilkörper 12' in den beiden Offenstellungen im Abstand angeordnet ist.

Die Figur 5 zeigt eine Konfiguration der Brüheinheit 1' zum drucklosen Herstellen eines Kaffeeheißgetränks KHG'. Hier befindet sich der Ventilkörper 12' in der ersten Offenstellung und ist im Abstand zur Ventilöffnung 14' angeordnet, so dass Kaffeeheißgetränk KHG' aus der Brühkammer 5' durch diese hindurchströmen und in den Fluidpfad 7' eintreten kann. Der vorgespannte Ventilkörper 12' stützt sich an einem im Fluidpfad 7 ausgebildeten Anschlag 16' ab.

Der Stempel 8' ist im Abstand zum Kolbenunterteil 6b' angeordnet, so dass das zwischen dem Stempel 8' und dem Kolben 6' befindliche Kaffeepulver KP' nicht verpresst wird. Dadurch ergibt sich auch ein Abstand zwischen dem Kolbenunterteil 6b' und dem Ventilkörper 12', sodass die Ventilöffnung 14' offen verbleibt und sich der Ventilkörper 12' somit in der ersten Offenstellung befindet. Da sich der Ventilkörper 12' in der ersten Offenstellung befindet, kann Kaffeeheißgetränk KHG' auch drucklos durch die Ventilöffnung 14' strömen, d.h. es ist kein Fluiddruck erforderlich, um den Ventilkörper 12' gegen die von der ersten Vorspanneinrichtung 10a' erzeugte Vorspannkraft vom Anschlag 16' wegzubewegen um die Ventilöffnung 14' zum Durchströmen mit Kaffeeheißgetränk KHG' freizugeben. Der Ventilkörper 12' weist Durchströmöffnungen auf, die in Figur 5 innerhalb und oberhalb des Anschlags 16' erkennbar sind, über die das Kaffeeheißgetränk KHG' dann zur Auslassleitung 11' gelangt.

Die Figur 6 zeigt eine Konfiguration der Brüheinheit 1' zum Herstellen eines druckbehafteten Kaffeeheißgetränks KHG'. Zum Herstellen des druckbehafteten Kaffeeheißgetränks KHG' wird das Kolbenunterteil 6b' mittels des Stempels 8' unter Verpressung des Kaffeepulvers KP' zum Kolbenoberteil 6a' hin bewegt, bis der Ventilkörper 12' die Ventilöffnung 14' verschließt, sich also in der Schließstellung befindet. Erst bei ausreichend hohem Fluiddruck des druckbehafteten Kaffeeheißgetränks KHG' wird der Ventilkörper 12' unter Überwindung der von der ersten Vorspanneinrichtung 10a' auf den Ventilkörper 12' ausgeübten Vorspannkraft vom Ventilsitz 13' weggedrückt, so dass er die Ventilöffnung 14' erneut zum Durchströmen mit dem Kaffeeheißgetränk KHG' freigibt. Dann ist der Ventilkörper 12' im Abstand zum Anschlag 16' angeordnet und befindet sich in der zweiten Offenstellung. Somit kann das in der Brühkammer 5' erzeugte Kaffeeheißgetränk KHG' als druckbehaftet zubereitetes Kaffeeheißgetränk KHG' über die Ventilöffnung 14' in die Fluidpfad 7' eintreten kann.

### Bezugszeichenliste

- 1, 1': Brüheinheit
- 2, 2': Gehäuse
- 3, 3': Siebträger
- 4, 4': Gehäuseinnenraum
- 5, 5': Brühkammer
- 6, 6': Kolben
- 6a': Kolbenoberteil
- 6b': Kolbenunterteil
- 7a: erster Fluidpfad
- 7b: zweiter Fluidpfad
- 7': Fluidpfad

- 8, 8': Stempel
- 9a: erste Ventileinrichtung
- 9b: zweite Ventileinrichtung
- 9': Ventileinrichtung
- 10a, 10a': erste Vorspanneinrichtung
- 10b, 10b': zweite Vorspanneinrichtung
- 10': Vorspanneinrichtung
- 11, 11': Auslassleitung
- 12': Ventilkörper
- 13': Ventilsitz
- 14': Ventilöffnung
- 15, 15': Sieb
- 16': Anschlag

## Patentansprüche

1. Brüheinheit (1) für einen Kaffeevollautomaten,
- mit einem Gehäuse (2), welches einen als Brühkammer (5) fungierenden Gehäuseinnenraum (4) teilweise begrenzt,
- mit einem den Gehäuseinnenraum (4) teilweise begrenzenden Kolben (6), in oder an welchem eine Auslassleitung (11) zum Ausleiten des in der Brüheinheit (5) zubereiteten Kaffeeheißgetränks (KHG) angeordnet ist,
- mit einem den Gehäuseinnenraum (4) teilweise begrenzenden und dem Kolben (6) gegenüberliegenden Stempel (8), der zum Verpressen von im Gehäuseinnenraum (4) vorhandenem Kaffeepulver (KP) gegenüber dem Gehäuse (2) verstellbar ausgebildet ist,
- mit einem im Kolben (6) angeordneten und fluidisch mit der Brühkammer (5) kommunizierenden ersten Fluidpfad (7a) zum Durchströmen mit dem in der Brühkammer (5) gebrühten Kaffeeheißgetränk (KHG) und mit einer im ersten Fluidpfad (7a) angeordneten und mittels des Stempels (8) verstellbare ersten Ventileinrichtung (9a) zum Freigeben des ersten Fluidpfads (7a),
- mit einer im Kolben (6) angeordneten und fluidisch mit der Brühkammer (5) kommunizierenden zweiten Fluidpfad (7b) zum Durchströmen mit dem in der Brühkammer (5) gebrühten Kaffeeheißgetränk (KHG) und mit einer im zweiten Fluidpfad (7b) angeordneten zweiten Ventileinrichtung (9b), zum Verschließen des zweiten Fluidpfads (7b),
- wobei die erste Ventileinrichtung (9a) mittels einer ersten Vorspanneinrichtung (10a) zu einer den ersten Fluidpfad (7a) freigebenden Offenstellung hin und die zweite Ventileinrichtung (9b) mittels einer zweiten Vorspanneinrichtung (10b) zu einer den zweiten Fluidpfad (7b) verschließenden Schließstellung hin vorgespannt sind.

2. Brüheinheit (1) nach Anspruch 1,
**dadurch gekennzeichnet, dass**
die erste Ventileinrichtung (9a) mittels des Stempels (8) in eine Schließstellung verstellbar ist, in welcher der erste Fluidpfad (7a) fluiddicht verschlossen ist.

3. Brüheinheit (1) nach Anspruch 1 oder 2,
**dadurch gekennzeichnet, dass**
die beiden Vorspanneinrichtungen (10a, 10b) so aufeinander abgestimmt sind, dass die zweite Ventileinrichtung (10b) zumindest solange in der Schließstellung verbleibt, bis die erste Ventileinrichtung (9a) mittels des Stempels (8) in die Schließstellung verstellt ist.

4. Brüheinheit (1) nach einem er Ansprüche 1 bis 3,
**dadurch gekennzeichnet, dass**
der zweite Fluidpfad (7b) mit der zweiten Ventileinrichtung (9b) innerhalb der ersten Ventileinrichtung (9a) angeordnet ist.

5. Brüheinheit (1) nach einem der vorhergehenden Ansprüche,
**dadurch gekennzeichnet, dass**
der erste Fluidpfad (7a) den zweiten Fluidpfad (7b) außen umgibt und mittels des Kolbens (6) fluidisch vom zweiten Fluidpfad (7b) getrennt ist.

6. Brüheinheit (1) nach einem der Ansprüche 1 bis 3,
**dadurch gekennzeichnet, dass**
der zweite Fluidpfad (7b) mit der zweiten Ventileinrichtung (9) im Abstand zum ersten Fluidpfad (7a) im Kolben (6) angeordnet ist.

7. Brüheinheit (1) nach einem der vorhergehenden Ansprüche,
**dadurch gekennzeichnet, dass**
die beiden Fluidkanäle (7a, 7b) fluidisch mit einer gemeinsamen Auslassleitung (11) kommunizieren.

8. Brüheinheit (1')für einen Kaffeevollautomaten,
- mit einem Gehäuse (2'), welches einen als Brühkammer (5') fungierenden Gehäuseinnenraum (4') umgibt,
- mit einem den Gehäuseinnenraum (4') teilweise begrenzenden Kolben (6), in oder an welchem eine Auslassleitung (11') zum Ausleiten des in der Brüheinheit (1') zubereiteten Kaffeeheißgetränks (KHG') angeordnet ist,
- wobei der Kolben (6) ein Kolbenoberteil (6a') und ein separat zum Kolbenoberteil (6a') und gegenüber diesem und dem Gehäuse (2') verstellbar ausgebildetes Kolbenunterteil (6b') umfasst,
- wobei im Kolbenoberteil (6a') fluidisch mit der Brühkammer (5') kommunizierender Fluidpfad (7) angeordnet ist, in welchem eine verstellbare Ventileinrichtung (9') angeordnet ist, deren Ventilkörper (12') verstellbar ist zwischen wenigstens einer ersten Offenstellung und einer zweiten Offenstellung und einer Schließstellung,
- wobei im Kolbenunterteil (6b') eine Ventilöffnung (14') vorgesehen ist, welche in der Schließstellung des Ventilkörpers (12') fluiddicht verschlossen ist und in der Offenstellung zum Durchströmen mit Kaffeeheißgetränk (KHG') freigegeben ist,
- wobei das Kolbenunterteil (6b') mittels einer ersten Vorspanneinrichtung (10a') vom Kolbenoberteil (6a') weg vorgespannt ist und der Ventilkörper (12') mittels einer zweiten Vorspanneinrichtung (10a') zum Kolbenunterteil (6b') hin vorgespannt ist.

9. Brüheinheit (1') nach Anspruch 8,
**dadurch gekennzeichnet, dass**
in der ersten Offenstellung der Ventilkörper (12') im Abstand zur Ventilöffnung (14') angeordnet ist und sich an einem im Fluidpfad (7') ausgebildeten Anschlag (16') abstützt.

10. Brüheinheit (1') nach Anspruch 8 oder 9,
**dadurch gekennzeichnet, dass**
in der zweiten Offenstellung der Ventilkörper (12') im Abstand zur Ventilöffnung (14') angeordnet ist und außerdem im Abstand zum Anschlag (16') angeordnet ist.

11. Kaffeevollautomat, insbesondere zum wahlweisen Erzeugen eines drucklosen oder druckbehafteten Kaffeeheißgetränks,
- mit einem Mahlwerk zum Mahlen von Kaffeebohnen,
- mit einer Brüheinheit (1; 1') nach einem der vorhergehenden Ansprüche zum Erzeugen eines Kaffeeheißgetränks aus Brühwasser und den mittels des Mahlwerks zu Kaffeepulver gemahlenen Kaffeebohnen.
